# NEUE EUROPÄISCHE PATENTSCHRIFT

(11) **EP 2 525 999 B2**
(45) Veröffentlichungstag und Bekanntmachung des Hinweises auf die Entscheidung über den Einspruch: **05.12.2018**
(45) Hinweis auf die Patenterteilung: 04.12.2013
(21) Anmeldenummer: 11700830.0
(22) Anmeldetag: 12.01.2011
(51) Int. Cl.: B60R 13/04

(54) **BEFESTIGUNG EINER LÄNGSTRÄGERVERKLEIDUNG AN EINEM LÄNGSTRÄGER EINES KRAFTFAHRZEUGS**
FASTENING OF A LONGITUDINAL BEAM LINING ON A LONGITUDINAL BEAM OF A MOTOR VEHICLE
FIXATION D'UN REVÊTEMENT DE LONGERON SUR UN LONGERON D'UN VÉHICULE AUTOMOBILE

(30) Priorität: 18.01.2010 DE 102010004978
(43) Veröffentlichungstag der Anmeldung: 28.11.2012
(73) Patentinhaber: Plastic Omnium Automotive Exteriors GmbH, 80807 München (DE)
(72) Erfinder: HESSE, Frank, 91757 Treuchtlingen (DE); SANDNER, Norbert, 90763 Fürth (DE); MAYR, Egon, 84104 Tegernbach (DE); TITZE, Holger, 80797 München (DE)
(74) Vertreter: LLR
(86) Internationale Anmeldenummer: PCT/EP2011/050290
(87) Internationale Veröffentlichungsnummer: WO 2011/086072

(56) Entgegenhaltungen:
- DE-A1- 19 507 986
- DE-A1-102006 001 028
- DE-C1- 19 636 505
- DE-U1- 9 420 291
- DE-U1- 20 009 877
- US-A1- 2005 082 813

## Beschreibung

Die Erfindung betrifft eine Befestigung einer Längsträgerverkleidung an einem Längsträger eines Kraftfahrzeugs mit einem Halteelement, welches am Längsträger befestigt ist und die Längsträgerverkleidung an ihrem zum Halteelement gewandten Endbereich ein Rastelement aufweist, mit dem die Längsträgerverkleidung am Halteelement verrastet ist.

Längsträgerverkleidungen (auch als Schweller bezeichnet) werden gewöhnlich mit unterschiedlichsten Befestigungsmaterialien am Längsträger bzw. der Karosserie befestigt. Bevorzugt werden die Längsträgerverkleidungen mit einer Verrastung befestigt, wobei die Verrastungseinheiten an der Längsträgerverkleidung angeformt sind, um zusätzliches Befestigungsmaterial zu sparen.

In den meisten Fällen werden die angeformten Verrastungen an der Längsträgerverkleidung so ausgebildet, dass sichtbare Einfallstellen entstehen und die Längsträgerverkleidung oft in unterschiedlichen Richtungen montiert werden muss. Die montierende Person kann in den meisten Fällen auch nicht genau feststellen, ob die Verrastung in Ordnung ist oder die Rastelemente verformt und somit wirkungslos sind. Eine Befestigung einer Längsträgerverkleidung an einem Längsträger eines Kraftfahrzeug nach dem Oberbegriff des Anspruchs 1 ist aus dem Dokument DE 102006001028 A bekannt.

Der Erfindung liegt die Aufgabe zugrunde, eine Befestigung einer Längsträger-verkleidung an einem Längsträger eines Kraftfahrzeugs nach dem Oberbegriff des Anspruchs 1 so zu verbessern, dass das Bauvolumen der Befestigung im Vergleich zum Stand der Technik verringert ist. Außerdem soll eine einfache Montage und Demontage in einer Montagerichtung erreicht werden und eine sichere abzeichnungsfreie Optik ohne zusätzliches Befestigungsmaterial erreicht werden.

Erfindungsgemäß wird diese Aufgabe durch den Anspruch 1 gelöst. Hierdurch ist das Bauvolumen der Befestigung im Vergleich zum Stand der Technik verringert. Die Verringerung beträgt mindestens die Höhe des Einzuges.

In bevorzugter Ausführungsform weist das Halteelement einen U-förmigen Verrastungsschlitz bestehend aus einem Halteschenkel und einem Verrastungsschenkel auf und ist im Verrastungsschenkel eine Ausnehmung zur Aufnahme des Rasthakens am Rastelement der Längsträgerverkleidung angeordnet. Diese Art Verrastungsschlitz benötigt eine extrem geringe Bauhöhe bei gleichzeitiger guter Verrastung. Außerdem ist die Verrastung im Falle einer Reparatur wieder lösbar.

In bevorzugter Ausführungsform weist der Rasthaken einen dreieckigen Querschnitt auf, wobei ausgehend von der an der Spitze des Rastelements angeordneten Nase der Rasthaken eine Einführschräge aufweist, die an ihrem der Nase abgewandten Ende in eine Halteschräge übergeht. Die Einführschräge bzw. deren Schräge bestimmt die Eindrückkraft, d.h. die Kraft die aufgewendet werden muss, damit die Verrastung ermöglicht wird. Die Halteschräge bzw. deren Schräge bestimmt die Haltekraft, d.h. die Kraft mit der der Rasthaken in der Ausnehmung verrastet ist.

Es hat sich als vorteilhaft herausgestellt, wenn ausgehend von der Nase die Einführschräge in einem Winkel 20° < α < 55°, bevorzugt 30° < α < 45°, besonders bevorzugt 35° < α < 40° zur im Einbauzustand der Längsträgerverkleidung unsichtbaren Oberfläche der Längsträgerverkleidung verläuft.

Es hat sich weiterhin als vorteilhaft herausgestellt, wenn ausgehend von dem der Nase abgewandten Ende die Halteschräge des Rasthakens in einem Winkel 40° < β < 80°, bevorzugt 50° < β < 70°, besonders bevorzugt 55° < β < 65° zur im Einbauzustand der Längsträgerverkleidung unsichtbaren Oberfläche der Längsträgerverkleidung verläuft.

Bevorzugt geht die Einführschräge an der Nase in eine Stoßschräge über, die in einem Winkel 60° < γ < 120°, bevorzugt 80° < γ < 100° zur Einführschräge angeordnet ist. Diese Stoßschräge ist ein Zentrierelement beim Einrastvorgang.

In bevorzugter Weiterbildung ist die der Halteschräge zugewandte Wand der Ausnehmung im Verrastungsschenkel an die Kontur der Halteschräge angepasst, wodurch sich im Verrastungszustand des Rasthakens in der Ausnehmung eine flächige Auflage ergibt. Flächige Auflagen verteilen die auftretenden Kräfte.

Bevorzugt sind die Rasthaken so angebracht, dass sie sich bei der Montage nicht verformen können und keine Oberflächenabzeichnungen auf der im Einbauzustand der Längsträgerverkleidung unsichtbaren Oberfläche der Längsträgerverkleidung ergeben.

Zur dauerhaften Befestigung und unter Einhaltung von Spaltvorgaben wird somit vorgeschlagen, dass die Längsträgerverkleidung angeformte Rasthaken aufweist, die in einer am Längsträger 2 befestigten Halteleiste einfährt und verrastet.

Nachfolgend wird die Erfindung anhand von Figuren weiter erläutert.

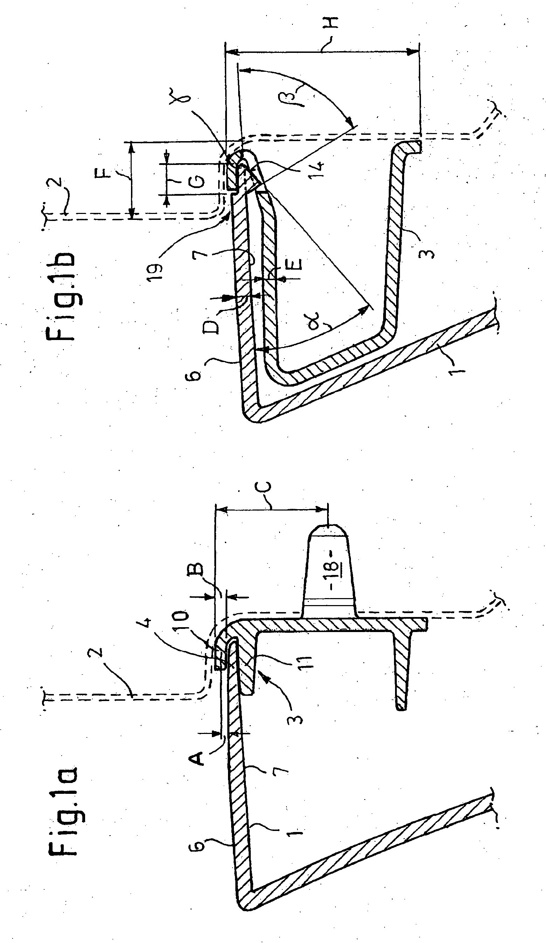

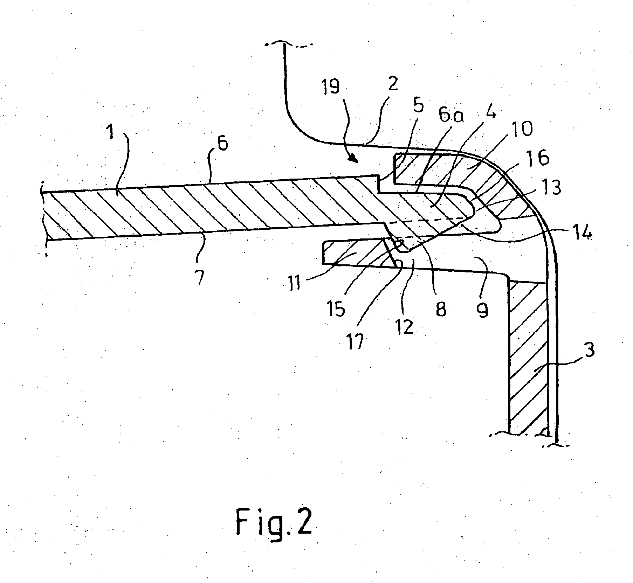

In den Figuren 1a, 1b ist eine erfindungsgemäße Befestigung einer Längsträgerverkleidung 1 an einem Längsträger 2 eines Kraftfahrzeugs in zwei Schnitten gezeigt. Figur 2 zeigt den Bereich der Verrastung in einem vergrößerten Ausschnitt aus Figur 1 b.

Der Längsträger 2 weist im Bereich der Befestigung eine Senke auf, in der ein Halteelement 3 befestigt ist. Hierzu ist im Längsträger ein Durchbruch eingebracht, in den ein Haltestift 18 am Halteelement 3 eingesteckt ist. Zur Befestigung der Längsträgerverkleidung 1 weist das Halteelement 3 einen U-förmigen Verrastungsschlitz 9 bestehend aus einem Halteschenkel 10 und einem Verrastungsschenkel 11 auf. Im Verrastungsschenkel 11 ist eine Ausnehmung 12 zur Aufnahme des Rasthakens 8 am Rastelement 4 der Längsträgerverkleidung 1 angeordnet.

Die Längsträgerverkleidung 1 weist an ihrem Rand ein Rastelement 4 zur Verrastung mit dem Rasthaken 8 auf. Erfindungsgemäß geht die im Einbauzustand der Längsträgerverkleidung 1 sichtbare Oberfläche 6 der Längsträgerverkleidung 1 am Rastelement 4 in einen Einzug 5 über. Unter Einzug 5 wird eine Stufe verstanden, mit der die Oberfläche 6 in eine in Höhe der Stufe eingezogene Oberfläche 6a übergeht. Die Oberflächen 6, 6a sind im Wesentlichen parallel zueinander angeordnet und die Dicke der Längsträgerverkleidung 1 außerhalb des Rastelements 4 ist dadurch geringer als die Dicke am Rastelement 4.

An der dem Einzug 5 gegenüberliegenden im Einbauzustand der Längsträgerverkleidung 1 unsichtbaren Oberfläche 7 der Längsträgerverkleidung 1 ist ein Rasthaken 8 angeordnet. Dieser Rasthaken 8 ist im Querschnitt dreieckförmig ausgebildet, wobei ausgehend von der an der Spitze des Rastelements 4 angeordneten Nase 13 der Rasthaken 8 eine Einführschräge 14 aufweist, die an ihrem der Nase 13 abgewandten Ende in eine Halteschräge 15 übergeht. Mit der Einführschräge 14, bzw. deren Winkel α wird die Kraft eingestellt, mit der die Längsträgerverkleidung 1 bis zur Verrastung eingedrückt werden muss. Mit der Halteschräge 15, bzw. deren Winkel β wird die Haltekraft der Verrastung eingestellt. Die genannten Winkel sind in die Figur 1b eingezeichnet. Figur 1b zeigt auch, dass die Einführschräge 14 an der Nase 13 in einem Winkel γ in eine Stoßschräge 16 übergeht. Dieser Bereich mit dem Winkel γ dient beim Eindrücken als Zentrierhilfe.

In der hier gezeigten Ausführungsform ist die der Halteschräge 15 zugewandte Wand 17 der Ausnehmung 12 im Verrastungsschenkel 11 an die Kontur der Halteschräge 15 angepasst, wodurch sich im Verrastungszustand des Rasthakens 8 in der Ausnehmung 12 eine flächige Auflage oder Anlage ergibt.

Die Befestigung der Längsträgerverkleidung 1 an dem Längsträger mittels eines Halteelementes 3 hat Wärmedehnung ausgleichende integrierte Elemente ohne Inanspruchnahme zusätzlicher Befestigungselemente. Die Anordnung der Rasthaken 8, die der Befestigung dienen, sind so im Formteil bzw. der Längsträgerverkleidung 1 integriert, dass diese abzeichnungsfrei herstellbar sind, d.h. befinden sich auf der nicht sichtbaren Oberfläche. Dies stellt ein wesentliches Qualitätsmerkmal dar. Zusätzlich stellt die Anordnung der Bauteile 1, 2, 3 eine so genannte Schattenfuge 19 dar, die Trennkanten, Rasthaken, Anbindungen von Angüssen nicht sichtbar erscheinen lässt.

Die Befestigung der Längsträgerverkleidung 1 im Halteelement 3 ist so gestaltet, dass eine Wärmeausdehnung in Längsrichtung ohne Verformungen der Längsträgerverkleidung 1 möglich ist.

Der Längsträger 2 wird mit einfachen bevorzugt runden Ausnehmungen in Aufnahmequalität ausgelegt. Darauf werden die Halteelemente 3 mit Haltestiften 18 mit integriertem Wärmeausgleichssystem aufgesteckt. Eine einfache Montage sowie Demontage ist hier ebenso durchführbar.

Die Aufnahmequalität der Ausnehmungen im Längsträger 2 gewährleisten eine exakte Positionierung der Verkleidungsbauteile bzw. der Längsträgerverkleidung 1. Danach wird die Längsträgerverkleidung 1 einfach mittels Stoßschräge 16 und Einführschräge 14 in Montageposition gebracht und verrastet. Die Rastkräfte sind so ausgelegt, dass die Einrastkräfte < 50 N und die Abzugskräfte > 150 N erreichen.

Da der Werker die Rastpositionen nicht einsehen kann, ist die Einführung der Längsträgerverkleidung 1 in das Halteelement 3 auch als "Blind Operation" durchführbar. Dies geschieht mittels des Zentrierelementes, d.h. der Nase 13 und der Stoßschräge 16, die in die Längsträgerverkleidung 1 integriert sind und stellen zusätzlich eine sichtbare Markierung zur Sichtprüfung des Werkers dar.

Außerdem ist eine einfache Demontage und Montage ermöglicht. Die integrierten Wärmeelemente gewährleisten einen Temperaturausgleich zwischen den üblichen Prüftemperaturen von -30° / +90° Celsius, ohne dass sichtbare Verformungen an der Längsträgerverkleidung 1 auftreten.

Nachfolgend einige bevorzugte Größenangaben, wie sie in den Figuren gezeigt sind.

| | | | |
|---|---|---|---|
| A = | 1 mm | G = | 6 mm |
| B = | 2 mm | H = | 37 mm |
| C = | 19 mm | α = | 37° |
| D = | 3 mm | β = | 63° |
| E = | 2,5 mm | γ = | 80° |
| F = | 15 mm | | |

## Patentansprüche

1. Befestigung einer Verkleidung (1) an einem Träger (2) eines Kraftfahrzeugs mit einem Halteelement (3), welches am Träger (2) befestigt ist, wobei die Verkleidung (1) an ihrem zum Halteelement (3) gewandten Endbereich ein Rastelement (4) aufweist, mit dem die Verkleidung (1) am Halteelement (3) verrastet ist, wobei das Rastelement (4) einen die Dicke reduzierenden Einzug (5) zur angrenzenden im Einbauzustand der Verkleidung (1) sichtbaren Oberfläche (6) der Verkleidung (1) aufweist und an der dem Einzug (5) gegenüberliegenden im Einbauzustand der Verkleidung (1) unsichtbaren Oberfläche (7) der Verkleidung (1) das Rastelement (4) einen Rasthaken (8) aufweist, **dadurch gekennzeichnet, dass** die Verkleidung eine Längsträgerverkleidung ist und der Träger ein Längsträger ist, und dass das Halteelement (3) einen U-förmigen Verrastungsschlitz (9) bestehend aus einem Halteschenkel (10) und einem Verrastungsschenkel (11) aufweist und im Verrastungsschenkel (11) eine Ausnehmung (12) zur Aufnahme des Rasthakens (8) am Rastelement (4) der Längsträgerverkleidung (1) angeordnet ist.

2. Befestigung nach Anspruch 1, **dadurch gekennzeichnet, dass** der Rasthaken (8) einen dreieckigen Querschnitt aufweist, wobei ausgehend von der an der Spitze des Rastelements (4) angeordneten Nase (13) der Rasthaken (8) eine Einführschräge (14) aufweist, die an ihrem der Nase (13) abgewandten Ende in eine Halteschräge (15) übergeht.

3. Befestigung nach Anspruch 2, **dadurch gekennzeichnet, dass** ausgehend von der Nase (13) die Einführschräge (14) in einem Winkel 20° < α < 55°, bevorzugt 30° < α < 45°, besonders bevorzugt 35° < α < 40° zur im Einbauzustand der Längsträgerverkleidung (1) unsichtbaren Oberfläche (7) der Längsträgerverkleidung (1) verläuft.

4. Befestigung nach Anspruch 2 oder 3, **dadurch gekennzeichnet, dass** ausgehend von dem der Nase (13) abgewandten Ende die Halteschräge (15) des Rasthakens (8) in einem Winkel 40° < β < 80°, bevorzugt 50° < β < 70°, besonders bevorzugt 55° < β < 65° zur im Einbauzustand der Längsträgerverkleidung (1) unsichtbaren Oberfläche (7) der Längsträgerverkleidung (1) verläuft.

5. Befestigung nach einem der Ansprüche 2 bis 4, **dadurch gekennzeichnet, dass** die Einführschräge (14) an der Nase (13) in eine Stoßschräge (16) übergeht, die in einem Winkel 60° < γ < 120°, bevorzugt 80° < γ < 100° zur Einführschräge (14) angeordnet ist.

6. Befestigung nach einem der Ansprüche 1 bis 5, **dadurch gekennzeichnet, dass** die der Halteschräge (15) zugewandte Wand (17) der Ausnehmung (12) im Verrastungsschenkel (11) an die Kontur der Halteschräge (15) angepasst ist, wodurch sich im Verrastungszustand des Rasthakens (8) in der Ausnehmung (12) eine flächige Auflage ergibt.

## Claims

1. A fastening of a lining (1) on a beam (2) of a motor vehicle having a retaining element (3), which is attached to the beam (2), wherein the lining (1) has a snap-in element (4) on its end area facing the retaining element (3), with which the lining (1) is snapped onto the retaining element (3), wherein the snap-in element (4) has an indent (5) reducing the thickness with respect to the adjoining surface (6) of the lining (1) that is visible in the installation state of the lining (1) and the snap-in element (4) has a locking hook (8) on the surface (7) of the lining (1) that is opposite the indent (5) and not visible in the installation state of the lining (1), **characterized in that** the lining is a longitudinal beam lining and the beam is a longitudinal beam, and **in that** the retaining element (3) has a U-shaped locking slot (9) consisting of a retaining arm (10) and a locking arm (11) and in the locking arm (11) a recess (12) is arranged for the attachment of the locking hook (8) to the snap-in element (4) of the longitudinal beam lining (1).

2. A fastening according to claim 1, **characterized in that** the locking hook (8) has a triangular cross-section, wherein starting from the lug (13) arranged on the top of the snap-in element (4) the locking hook (8) has a lead-in slope (14), which merges on its end facing away from the lug (13) into a retaining slope (15).

3. A fastening according to claim 2, **characterized in that** starting from the lug (13) the lead-in slope (14) runs at an angle 20° < α < 55°, preferably 30° < α < 45°, in particular preferably 35° < α< 40° to the surface (7) of the longitudinal beam lining (1) not visible in the installation state of the longitudinal beam lining (1).

4. A fastening according to claim 2 or 3, **characterized in that** starting from the end facing away from the lug (13) the retaining slope (15) of the locking hook (8) runs at an angle 40° < β < 80°, preferably 50° < β < 70°, in particular preferably 55° < β < 65° to the surface (7) of the longitudinal beam lining (1) not visible in the installation state of the longitudinal beam lining (1).

5. A fastening according to one of claims 2 to 4, **characterized in that** the lead-in slope (14) merges on the lug (13) into an impact slope (16), which is arranged at an angle 60° < γ < 120°, preferably 80° < γ < 100°, to the lead-in slope (14).

6. A fastening according to one of claims 1 to 5, **characterized in that** the wall (17) of the recess (12) in the locking arm (11) facing towards the retaining slope (15) is adjusted to the contour of the retaining slope (15), whereby in the locking state of the locking hook (8) a flat support is produced in the recess (12).

## Revendications

1. Fixation d'un habillage (1) sur une poutre (2) d'un véhicule automobile, comportant un élément de retenue (3) qui est fixé à la poutre (2), dans laquelle l'habillage (1) comporte, au niveau de sa zone d'extrémité orientée vers l'élément de retenue (3), un élément d'encliquetage (4) par lequel l'habillage (1) est enclenché sur l'élément de retenue (3), dans laquelle l'élément d'encliquetage (4) comporte un retrait (5) réduisant l'épaisseur par rapport à la surface (6) adjacente de l'habillage (1), visible à l'état monté de l'habillage (1), et l'élément d'encliquetage (4) comporte un crochet d'encliquetage (8) sur la surface (7) de l'habillage (1) opposée au retrait (5) et non visible à l'état monté de l'habillage (1), **caractérisée en ce que** l'habillage est un habillage de longeron et la poutre est un longeron, et **en ce que** l'élément de retenue (3) comporte une fente d'encliquetage (9) en forme de U constituée d'une branche de retenue (10) et d'une branche d'encliquetage (11) et un évidement (12) est agencé dans la branche d'encliquetage (11) pour recevoir le crochet d'encliquetage (8) sur l'élément d'encliquetage (4) de l'habillage de longeron (1).

2. Fixation selon la revendication 1, **caractérisée en ce que** le crochet d'encliquetage (8) a une section transversale triangulaire, dans laquelle le crochet d'encliquetage (8) comporte, en partant du nez (13) agencé à la pointe de l'élément d'encliquetage (4), un biseau d'insertion (14) qui est prolongé par un biseau de retenue (15) au niveau de son extrémité opposée au nez (13).

3. Fixation selon la revendication 2, **caractérisée en ce que**, en partant du nez (13), le biseau d'insertion (14) s'étend à un angle 20° < α < 55°, de manière préférée 30° < α < 45°, de manière particulièrement préférée 35° < α < 40°, par rapport à la surface (7) de l'habillage de longeron (1) non visible à l'état monté de l'habillage de longeron (1).

4. Fixation selon la revendication 2 ou 3, **caractérisée en ce que**, en partant de l'extrémité opposée au nez (13), le biseau de retenue (15) du crochet d'encliquetage (8) s'étend à un angle 40° < α < 80°, de manière préférée 50° < α < 70°, de manière particulièrement préférée 55° < α < 65°, par rapport à la surface (7) de l'habillage de longeron (1) non visible à l'état monté de l'habillage de longeron (1).

5. Fixation selon l'une des revendications 2 à 4, **caractérisée en ce que** le biseau d'insertion (14) est prolongé au niveau du nez (13) par un biseau de butée (16) qui est agencée à un angle 60° < γ < 120°, de manière préférée 80° < γ < 100°, par rapport au biseau d'insertion (14).

6. Fixation selon l'une des revendications 1 à 5, **caractérisée en ce que** la paroi (17) de l'évidement (12) orientée vers le biseau de retenue (15) dans la branche d'encliquetage (11) est adaptée au contour du biseau de retenue (15), en sorte qu'il en résulte un appui plat à l'état encliqueté du crochet d'encliquetage (8) dans l'évidement (12).
